Europäisches Patentamt

European Patent Office

Office européen des brevets

(19)

(11) EP 0 903 609 A1

(12) DEMANDE DE BREVET EUROPEEN

(43) Date de publication:
24.03.1999 Bulletin 1999/12

(51) Int Cl.6: G02B 27/28, G02B 23/12, G01J 4/00

(21) Numéro de dépôt: 98402337.4

(22) Date de dépôt: 23.09.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 23.09.1997 FR 9711816

(71) Demandeur: THOMSON-CSF
75008 Paris (FR)

(72) Inventeurs:
• Collot, Laurent
94117 Arcueil Cedex (FR)
• Kerboull-Leclerc, Frédérique
94117 Arcueil Cedex (FR)
• Larive, Marc
94117 Arcueil Cedex (FR)

(74) Mandataire: Albert, Claude et al
Thomson-CSF Propriété Intellectuelle,
13, Avenue du Président Salvador Allende
94117 Arcueil Cédex (FR)

(54) Procédé d'imagerie tridimensionnelle à partir d'images thermiques

(57) Le procédé de l'invention consiste à effectuer, pour chaque pixel à traiter d'une image thermique d'un objet, trois mesures différentes, par exemple à l'aide d'un polariseur à trois orientations différentes, à en déduire les paramètres de Stockes de l'onde issue de l'objet correspondant au pixel considéré, à calculer les paramètres polarimétriques d'ellipticité et d'inclinaison du grand axe de l'ellipse de l'onde partiellement polarisée, et à reconstruire la surface tridimensionnelle visible de l'objet en déterminant pour chacun de ces pixels ses coordonnées grâce aux relations existant entre les paramètres polarimétriques de l'onde et l'indice optique du matériau constituant l'objet, et le vecteur normal à la surface de l'objet à l'emplacement du pixel.

FIG.1

EP 0 903 609 A1

## Description

La présente invention se rapporte à un procédé d'imagerie tridimensionnelle à partir d'images thermique.

Les systèmes d'imagerie thermique fonctionnant dans les bandes de meilleure transmission atmosphérique (3-5 μm et 8-12 μm) permettent de faire de la détection de jour comme de nuit, et même par temps brumeux. Les caméras les plus récentes ont de très bonnes résolutions et la qualité des images obtenues est remarquable. Cependant, dans plusieurs cas d'utilisation, on peut observer les limites de ces détecteurs.

En premier lieu, même si la sensibilité des caméras a beaucoup augmenté, il est impossible de distinguer un objet qui est à la même température que le fond sur lequel il repose. En effet, dans ce cas, les deux corps ont la même émissivité et par une détection d'intensité, on ne peut pas différencier les deux rayonnements. Enfin, les images obtenues ne sont pas souvent faciles à interpréter. En effet, si les variations thermiques sur la cible sont faibles, l'image thermique comportera peu de contrastes et seule la silhouette de la cible sera discernable. De même, si dans la scène observée il y a une source thermique, celle-ci va apparaître en surbrillance, ce qui fait que l'image thermique finale est très différente de celle que l'on obtiendrait en imagerie visible. Il faut donc dans la plupart des cas avoir un oeil averti pour pouvoir identifier les différents objets de la scène.

On connaît d'après le brevet US n° 5 416 324 un procédé d'imagerie tridimentionnelle à partir d'images thermiques consistant à calculer, pour chaque pixel d'une image thermique, à partir des paramètres de Stokes relevés à l'aide de polariseurs linéaires, le pourcentage de polarisation et l'angle de polarisation. Ceci permet de déterminer la direction de la normale à la surface à reconstruire en chaque pixel considéré, mais ne permet pas de déterminer le sens du vecteur correspondant. Pour lever cette indétermination, le brevet évoque un processeur, mais ne fournit absolument aucun détail le concernant, et, en fait, l'indétermination n'est résolue que par un observateur humain, ce qui, bien entendu, empêche toute automatisation du processus. En outre, bien que ce brevet précise que les paramètres de Stokes peuvent être obtenus par trois mesures d'orientation de polariseurs, il ne fournit que des algorithmes nécessitant quatre mesures.

La présente invention a pour objet un procédé permettant de visualiser de façon la plus réaliste possible des objets disposés sur un fond pouvant avoir la même émissivité thermique qu'eux et susceptibles d'émettre un rayonnement thermique, et ce, à partir d'informations obtenues à l'aide d'un capteur thermique.

Le procédé de l'invention comporte les étapes suivantes :

- on relève, pour au moins un lieu d'observation, pour chaque pixel ou groupe de pixels de l'image thermique d'au moins un objet se trouvant à un emplacement connu ou supposé, un triplet d'informations optiques relatives chacune à une condition d'observation déterminée différente,
- on stocke les informations ainsi relevées,
- on calcule, à partir des informations ainsi stockées trois paramètres de Stokes relatifs à chaque pixel en question,
- on calcule, à partir de ces trois paramètres, pour chaque pixel considéré, l'ellipticité, l'inclinaison du grand axe de l'ellipse et de l'intensité totale de l'onde partiellement polarisée issue du pixel considéré,
- à partir de ces dernières valeurs, on reconstruit un champ de vecteurs pseudo-normaux, qui sont, par petits domaines, normaux, à un demi-tour près autour de la ligne de visée, à la surface des objets au voisinage de ces domaines, et selon l'invention, on lève l'indétermination sur les sens des vecteurs normaux à l'aide de critères mathématiques et/ou topologiques, fondés sur des propriétés de régularité de la représentation mathématique de la surface à reconstruire, propriétés qui contraignent l'orientation des vecteurs normaux.

et, à partir des vecteurs normaux réorientés, on choisit une origine pour la surface de chaque objet, et de proche en proche, on assemble les surfaces élémentaires successives, et on reconstruit ainsi la surface visible de chaque objet considéré depuis le lieu d'observation en question.

Lors de la reconstruction de surfaces, soit on utilise une méthode d'optimisation permettant de modéliser l'image polarisée afin d'obtenir les mêmes propriétés de polarisation de la lumière que celles relevées pour les objets en question, soit on met en oeuvre des critères locaux déduits de la modélisation des surfaces à reconstruire.

De façon avantageuse, pour reconstruire les faces cachées des objets, on déplace de façon correspondante le lieu d'observation.

La présente invention sera mieux comprise à la lecture de la description détaillée d'un exemple de mise en oeuvre, pris à titre d'exemple non limitatif et illustré par le dessin annexé, sur lequel :

- la figure 1 est un schéma explicatif simplifié de la polarisation de la lumière d'émission propre à une interface,
- la figure 2 est un schéma sur lequel sont indiqués les paramètres caractéristiques d'un état de polarisation elliptique, et
- les figures 3 à 10 sont des schémas servant à expliquer la phase de reconstruction tridimentionnelle du procédé de l'invention.

Les propriétés polarimétriques de l'émission propre des surfaces lisses, diélectriques et conductrices, dont se sert le procédé de l'invention, ont été étudiées, par exemple dans l'article «A review of Emission Polarization » de Oscar SANDUS, Applied Optics, Vol.12, décembre 1965.

Le procédé de l'invention se propose d'extraire des images thermiques des informations différentes et complémentaires de l'intensité de rayonnement (seul paramètre que peut mesurer directement un capteur infrarouge) afin de détecter des objets dans une image thermique brute, et d'afficher sur un écran de visualisation l'image de ces objets avec un rendu « 3D », c'est-à-dire avec des effets optiques (texture, luminosité, albédo, effets d'éclairage, ...) offrant un rendu le plus réaliste possible, avec, le cas échéant, utilisation d'un dispositif d'affichage 3D vrai, fondé par exemple sur la stéréoscopie pour produire une visualisation encore plus proche de la perception 3D.

Les propriétés polarimétriques de l'émission propre étant déjà connues, comme précisé ci-dessus, on va simplement en rappeler les points principaux qui vont être exploités par le procédé de l'invention.

On sait que les objets dont la température (en degrés Kelvin) n'est pas nulle, émettent une « lumière» par suite de production de photons en leur sein. Ce rayonnement est soumis aux mêmes lois que le rayonnement optique classique, en particulier aux lois de réflexion et de réfraction à la sortie du corps dont il est issu, c'est-à-dire au passage de l'interface (dioptre) corps/air. En particulier, la lumière ainsi produite est partiellement polarisée, le degré de polarisation étant fonction de la nature du corps (en particulier sa constante diélectrique) et de la position et de l'orientation dudit dioptre par rapport à l'observation (ou au capteur réalisant les mesures relatives à ce rayonnement).

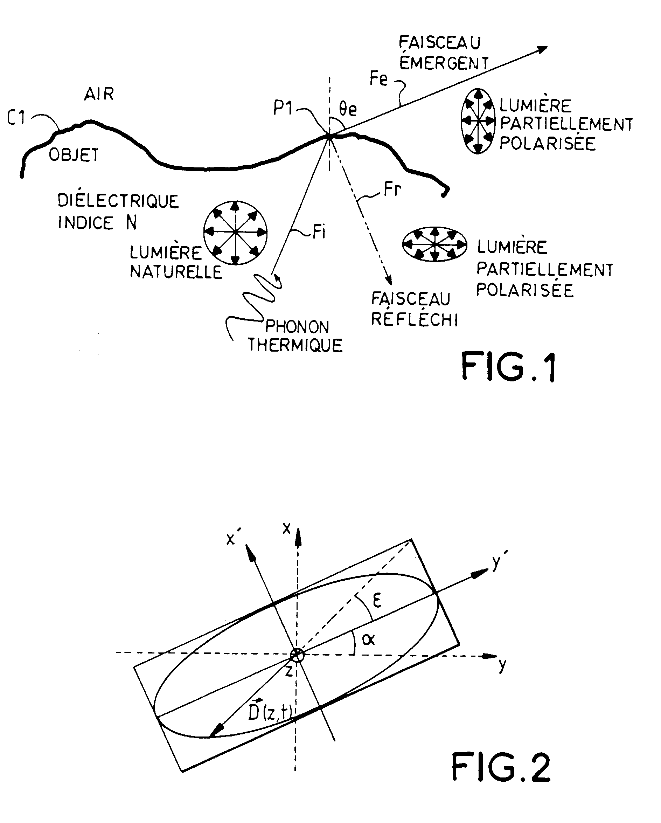

On a schématisé en figure 1 la façon dont est produite la lumière partiellement polarisée par un corps C1 d'indice diélectrique N. Un faisceau Fi de phonons thermiques produits dans ce corps arrive en P1 à l'interface corps/air. Il produit un faisceau Fr réfléchi à l'intérieur du corps et partiellement polarisé, et un faisceau émergent Fe également partiellement polarisé. Ainsi, on pourra différencier deux corps voisins de même intensité d'émission (telle que relevée par un capteur infrarouge classique) s'ils ont une orientation ou des propriétés (en particulier diélectriques) différentes.

Le procédé de l'invention met en oeuvre un capteur infrarouge classique, mais, pour une même position de ce capteur, il modifie séquentiellement ou simultanément les caractéristiques du trajet optique entre les objets (ou leur emplacement supposé) et le capteur.

On va maintenant exposer brièvement les propriétés relatives à la polarisation de la lumière d'émission propre et les caractéristiques et paramètres utilisés par le procédé de l'invention.

La lumière émise par un corps isotrope par exemple, n'est pas polarisée tant qu'elle se propage à l'intérieur du corps. Certains effets, comme la réflexion, la réfraction ou encore la propagation à travers des milieux anisotropes donnent lieu à une polarisation partielle. La polarisation partielle de la lumière naturelle est susceptible d'apporter des informations différentes et intéressantes qu'exploite l'invention.

On peut également représenter le lieu géométrique de l'extrémité du vecteur induction électrique instantané, qui est cette fois-ci une ellipse (cf. figure 2). Il y a deux paramètres importants pour caractériser un état de polarisation elliptique : le rapport entre le petit axe et le grand axe de l'ellipse ou l'ellipticité (tan $\varepsilon$) et l'inclinaison du grand axe de l'ellipse ($\alpha$).

On a représenté en figure 2, dans le plan du dessin, qui est perpendiculaire au vecteur induction électrique D, ladite ellipse. Du fait que les paramètres $\varepsilon$ et $\alpha$ ne peuvent être mesurés directement, l'invention met en oeuvre les paramètres de Stokes, qui sont connus en soi, par exemple d'après le livre « Polarized Light » de E. COLLETT, aux éditions DEKKER, 1993.

Ces paramètres sont des composantes réelles du vecteur de Stokes et s'expriment en fonction de la moyenne temporelle des composantes du vecteur induction électrique et du déphasage de deux composantes orthogonales du vecteur induction électrique. Ces paramètres sont désignés I, Q, U et V.

Le formalisme de Stokes permet de représenter les différents états de polarisation en faisant appel à des grandeurs homogènes à des intensités. L'intensité est la seule grandeur mesurable directement. Lors d'une mesure d'intensité, on mesure en réalité l'intensité moyenne des ondes arrivant sur le détecteur. En effet, le détecteur ne fait pas la mesure instantanée, il possède un temps d'intégration non négligeable devant les fréquences d'oscillation des ondes mesurées. De plus, si l'on mesure des intensités en lumière naturelle, il faut tenir compte de la largeur spectrale du détecteur qui est sensible à plus d'une longueur d'onde.

Le formalisme de Stokes est particulièrement intéressant pour des lumières partiellement polarisées. Dans le cas d'ondes polychromatiques partiellement polarisées, la dernière composante du vecteur de Stokes n'a pas de signification physique, et ne sera donc pas utilisé par l'invention. Dans la suite, on notera :

$$I = <E_x.E_x^* + E_y.E_y^*>$$

$$Q = <E_x.E_x^* - E_y.E_y^*>$$

$$V = < Ex.\ Ey^* + Ey.Ex^* >$$

<...> signifiant valeur moyenne, Ex et Ey étant respectivement les composantes horizontale et verticale du champ complexe.

Pour mesurer indirectement les paramètres de Stokes (I, Q, U), on associe au capteur d'image thermique un élément optique qui est interposé entre l'objet à déterminer et le capteur. Cet élément optique doit pouvoir modifier de trois façons différentes l'état de polarisation de la lumière provenant de l'objet (c'est-à-dire par exemple état non modifié, et modifié de deux façons différentes), et ce, afin d'obtenir un système de trois équations à trois inconnues, donc de calculer ces trois inconnues.

A cet effet, on met en oeuvre les matrices de Mueller, qui permettent de caractériser des éléments optiques.

Si une lumière, dont le vecteur de Stokes est $\vec{S}_{in}$, traverse un système optique, celui-ci peut modifier son état de polarisation. On obtient alors en sortie de ce système une lumière dont l'état de polarisation est différent. Cette lumière est donc décrite par un vecteur de Stokes $\vec{S}_{out}$ différent. On peut donc a priori représenter les effets dépolarisant ou polarisant de ce système par une matrice M.

$$\vec{S}_{out} = M\vec{S}_{in}$$

Le formalisme permettant d'associer à chaque système optique polarisant ou dépolarisant une matrice est le formalisme de Mueller. Les matrices de Mueller sont des matrices $4 \times 4$. Grâce à ce formalisme, on obtient un système de quatre équations linéaires reliant les paramètres de Stokes de l'onde avant et après la traversée de ce système.

$$\begin{pmatrix} I_{out} \\ Q_{out} \\ U_{out} \\ V_{out} \end{pmatrix} = \begin{pmatrix} m_{11} & m_{12} & m_{13} & m_{14} \\ m_{21} & m_{22} & m_{23} & m_{24} \\ m_{31} & m_{32} & m_{33} & m_{34} \\ m_{41} & m_{42} & m_{43} & m_{44} \end{pmatrix} \begin{pmatrix} I_{in} \\ Q_{in} \\ U_{in} \\ V_{in} \end{pmatrix}$$

Le seul paramètre du vecteur de Stokes mesurable directement par un détecteur quadratique est l'intensité. Q, U et V ne peuvent pas être déterminés ainsi. Par contre, si l'on place un dispositif optique présentant une activité optique entre la scène et le détecteur, on obtient une équation liant l'intensité mesurée par le détecteur et les quatre paramètres de Stokes de l'onde lumineuse étudiée.

$$I_{out} = m_{11}I_{in} + m_{12}Q_{in} + m_{13}U_{in} + m_{14}V_{in}$$

Il faut en théorie quatre équations de ce type pour caractériser entièrement l'état de polarisation de la lumière étudiée. On peut envisager de placer entre le détecteur et la scène quatre systèmes optiques différents dont on connaît les matrices de Mueller. On peut ainsi à partir de quatre mesures d'intensité caractériser entièrement l'état de polarisation de la lumière émise par les objets de la scène étudiée, si la matrice [m] correspondante est inversible :

$$\begin{pmatrix} I_1 \\ I_2 \\ I_3 \\ I_4 \end{pmatrix} = [m] \begin{pmatrix} I_{in} \\ Q_{in} \\ U_{in} \\ V_{in} \end{pmatrix} \Leftrightarrow \begin{cases} I_1 = (m_{11})_1 I_{in} + (m_{12})_1 Q_{in} + (m_{13})_1 U_{in} + (m_{14})_1 V_{in} \\ I_2 = (m_{11})_2 I_{in} + (m_{12})_2 Q_{in} + (m_{13})_2 U_{in} + (m_{14})_2 V_{in} \\ I_3 = (m_{11})_3 I_{in} + (m_{12})_3 Q_{in} + (m_{13})_3 U_{in} + (m_{14})_3 V_{in} \\ I_4 = (m_{11})_4 I_{in} + (m_{12})_4 Q_{in} + (m_{13})_4 U_{in} + (m_{14})_4 V_{in} \end{cases}$$

Cependant, du fait que l'invention exploite de la lumière partiellement polarisée, V est nul et l'on peut donc réduire les quatre mesures à trois, comme précisé ci-dessus.

Pour effectuer ces trois mesures, on peut interposer trois systèmes optiques différents sur le trajet, mais pour simplifier les mesures, l'invention a recours à un seul système optique pouvant avoir trois caractéristiques (activités optiques) différentes vis-à-vis de la lumière émise par les objets. Selon un mode de réalisation préféré, ce système optique est un polariseur à grille rotatif, mais il est bien entendu que d'autres systèmes optiques présentant ces trois caractéristiques différentes peuvent être mis en oeuvre, par exemple d'autres types de polariseurs (à angle de Brewster, ...) ou des lames d'ondes combinées à un polariseur.

Si l'on définit un polariseur d'azimut θ comme un filtre laissant uniquement passer les ondes polarisées linéairement dans la direction d'un axe faisant un angle θ avec l'horizontale, sa matrice de Mueller simplifiée (au cas de I, Q, V) est :

$$M_{pol} = \frac{1}{2} \begin{bmatrix} 1 & \cos(2\theta) & \sin(2\theta) \\ \cos(2\theta) & \cos^2(2\theta) & \cos(2\theta)\sin(2\theta) \\ \sin(2\theta) & \cos(2\theta)\sin(2\theta) & \sin^2(2\theta) \end{bmatrix}$$

Connaissant la matrice de Mueller d'un polariseur, on peut obtenir $I_{in}$, $Q_{in}$, $U_{in}$ à partir de trois mesures en positionnant le polariseur de façon à avoir trois azimuts θ différents ($\theta_1$, $\theta_2$, $\theta_3$). On pourrait utiliser d'autres dispositifs optiques comme des lames introduisant des retards, cependant celles-ci présentent l'inconvénient de leur grande sensibilité à la longueur d'onde, or il est préférable d'utiliser, dans certaines applications, un dispositif couvrant une large bande spectrale (au moins entre 3 et 12 µm par exemple).

On obtient alors, pour ces trois mesures :

$$\begin{pmatrix} I_1 \\ I_2 \\ I_3 \end{pmatrix} = \frac{1}{2} \begin{pmatrix} 1 & \cos(2\theta_1) & \sin(2\theta_1) \\ 1 & \cos(2\theta_2) & \sin(2\theta_2) \\ 1 & \cos(2\theta_3) & \sin(2\theta_3) \end{pmatrix} \begin{pmatrix} I_{in} \\ Q_{in} \\ U_{in} \end{pmatrix}$$

Pour optimiser le système et minimiser l'impact d'une erreur de mesure, il faut rendre maximal le déterminant de cette matrice.

$$\Delta = \begin{vmatrix} 1 & \cos(2\theta_1) & \sin(2\theta_1) \\ 1 & \cos(2\theta_2) & \sin(2\theta_2) \\ 1 & \cos(2\theta_3) & \sin(2\theta_3) \end{vmatrix}$$

$$\Delta = \cos(2\theta_1)\big(\sin(2\theta_2) - \sin(2\theta_3)\big) + \cos(2\theta_2)\big(\sin(2\theta_3) - \sin(2\theta_1)\big)$$
$$+ \cos(2\theta_3)\big(\sin(2\theta_1) - \sin(2\theta_2)\big)$$

Soit x la différence entre les deux premiers angles et y la différence entre le troisième et le premier :

$$\theta_2 - \theta_1 = x$$

$$\theta_3 - \theta_1 = y$$

$$\Delta = -4 \sin(x) \sin(y) \sin(x - y)$$

On cherche la valeur de x pour laquelle $\Delta$ est maximal en fixant y :

$$\left. \frac{\partial \Delta}{\partial x} \right|_{yn} = -4 \sin(2x - y_0) \sin(y_0)$$

$$\left. \frac{\partial \Delta}{\partial x} \right|_{yn} = 0 \Leftrightarrow x = \frac{y_0}{2} + \frac{k\pi}{2}$$

Il faut donc prendre un écart constant entre les angles :

$$2x = y \Rightarrow \frac{\partial \Delta}{\partial x} = 8 \sin(x) \sin(3x)$$

$$\frac{\partial \Delta}{\partial x} = 0 \Leftrightarrow \begin{cases} x = k\pi \\ x = \dfrac{k\pi}{3} \end{cases} \text{avec k entier}$$

La seule solution possible est la seconde. La mesure $I_{in}$, $Q_{in}$, $U_{in}$ est optimisée pour $\theta_1 = \theta_0$, $\theta_2 = \theta_0 + 60°$, $\theta_3 = \theta_0 + 120°$. C'est cette configuration qui sera utilisée dans le mode de mise en oeuvre préféré décrit ci-dessous.
Pour remonter aux paramètres de Stokes à partir de ces trois mesures il faut résoudre le système d'équations suivant :

$$\begin{pmatrix} I_{in} \\ Q_{in} \\ U_{in} \end{pmatrix} = 2 \begin{pmatrix} 1 & \cos(2\theta_0) & \sin(2\theta_0) \\ 1 & \cos\left(\dfrac{2\pi}{3} + 2\theta_0\right) & \sin\left(\dfrac{2\pi}{3} + 2\theta_0\right) \\ 1 & \cos\left(\dfrac{4\pi}{3} + 2\theta_0\right) & \sin\left(\dfrac{4\pi}{3} + 2\theta_0\right) \end{pmatrix}^{-1} \begin{pmatrix} I_1 \\ I_2 \\ I_3 \end{pmatrix}$$

$$\begin{cases} I_{in} = \frac{2}{3}\left(I_1 + I_2 + I_3\right) \\ Q_{in} = \frac{2}{3}\left(2\cos(2\theta_0)I_1 + 2\cos\left(2\theta_0 + \frac{2\pi}{3}\right)I_2 + 2\cos\left(2\theta_0 + \frac{4\pi}{3}\right)I_3\right) \\ U_{in} = \frac{2}{3}\left(2\sin(2\theta_0)I_1 + 2\sin\left(2\theta_0 + \frac{2\pi}{3}\right)I_2 + 2\sin\left(2\theta_0 + \frac{4\pi}{3}\right)I_3\right) \end{cases}$$

Grâce aux trois équations précédentes, on connaît les trois premiers paramètres du vecteur de Stokes. On peut à partir de ces paramètres calculer les trois coefficients caractérisant l'état de polarisation de la lumière reçue au niveau d'un détecteur :

$I_{totale}$ : intensité totale de la lumière.
$\tan\varepsilon$ : ellipticité de la lumière (rapport du grand axe et du petit axe de l'ellipse de polarisation).
$\alpha$ : inclinaison du grand axe de l'ellipse.

On remarque que l'intensité totale émise est le double de l'intensité incidente sur le détecteur. En effet, on considère qu'en moyenne seule la moitié de la puissance émise par l'objet est transmise à travers le polariseur.
La forme la plus générale du vecteur de Stokes pour de la lumière partiellement polarisée est :

$$\vec{S} = \begin{pmatrix} I_{totale} \\ I_{totale}\ \cos(2\varepsilon)\cos(2\alpha) \\ I_{totale}\ \cos(2\varepsilon)\sin(2\alpha) \\ 0 \end{pmatrix}$$

Les formules utilisées pour calculer l'ellipticité, l'inclinaison du grand axe de l'ellipse et l'intensité totale sont donc :

$$I_{totale} = I_{in}$$

$$\alpha = \frac{1}{2}\arctan\left(\frac{U_{in}}{Q_{in}}\right)$$

$$\tan\varepsilon = \sqrt{\frac{I_{totale} - \sqrt{U_{in}^2 + Q_{in}^2}}{I_{totale} + \sqrt{U_{in}^2 + Q_{in}^2}}}$$

Connaissant ces trois paramètres caractéristiques ($I_{totale}$, $\tan\varepsilon$ et $\alpha$) d'une lumière partiellement polarisée pour chaque point mesuré de l'objet (tous les pixels que permet de capter la résolution du capteur, ou certains d'entre eux comme décrit ci-dessous), on peut déterminer le vecteur normal à la surface de l'objet au point mesuré considéré.
Malheureusement, cette mesure indirecte de la normale à la surface laisse subsister une inconnue : on ne sait déterminer l'angle entre la normale à l'objet et la ligne de visée de la caméra qu'à $\pi$ près. On a donc pour chaque point de la surface de l'objet deux vecteurs normaux possibles, symétriques par rapport à l'axe de visée.
On va présenter les hypothèses faites pour pouvoir déterminer l'orientation des vecteurs normaux, ainsi que la méthode utilisée pour obtenir les coordonnées (x, y, z) des points M de la surface de l'objet.
Revenons aux informations obtenues par l'imagerie polarimétrique en chaque point de la scène étudiée. On peut associer à chaque pixel de l'image :

- son abscisse,
- son ordonnée,
- l'ellipticité de la lumière émise en ce point dont le vecteur k est parallèle à la ligne de visée de la caméra,
- l'inclinaison du grand axe de l'ellipse de polarisation,
- l'intensité totale émise par ce point.

Si l'on veut pouvoir retrouver la forme tridimensionnelle d'un objet de la scène, il faut pour chaque pixel, la cote z correspondant à l'abscisse x et à l'ordonnée y. On supposera ici que la profondeur de la scène devant la distance d'observation est telle qu'une approximation projective est acceptable. Toutefois, on peut effectuer, le cas échéant, une correction de parallaxe.

La détermination de la cote z (x, y) permettra ensuite de visualiser la scène 3D sous un angle quelconque. Il y a en fait deux inconnues dans les équations qui relient le vecteur normal à la surface et les paramètres polarimétriques : l'ellipticité et la valeur du matériau considéré. Il faut donc trouver un moyen de mesurer cet indice optique (n). On sait que quand l'émission devient rasante, l'ellipticité tend vers une valeur particulière, propre à chaque matériau :

$$\tan \varepsilon = \sqrt{\frac{1}{|n|^2}} \; pour \; \theta_e \to \frac{\pi}{2}$$

($\theta_e$ = angle d'émission du faisceau émergent - voir Fig. 1)

Donc, si l'on veut obtenir une information relative à l'indice optique, il faut prendre une image de la scène de façon à obtenir des angles d'émission rasants. Il est important de noter que l'on saura que la face visible de l'objet étudié est presque perpendiculaire à la ligne de visée (angles d'émission rasants) quand la valeur de l'ellipticité sera minimale, donc quand sur l'image codée en ellipticité la différence entre l'objet et le fond non polarisé sera maximale. Ayant le module de n, on peut résoudre l'équation implicite en $\theta_e$ :

$$f^{-1}\left(\tan \varepsilon\right)\Big|_{n = n_{mil}} = \theta_e \, avec \, f\left(\theta_e\right) = \cos\left(\arcsin\left(\frac{\sin\theta_e}{n}\right) - \theta_e\right)$$

avec $n_{mil}$ = indice optique de l'objet en question

Il se peut qu'il y ait de faibles variations de l'ellipticité d'un pixel à l'autre, dues aux variations des mesures. Aussi, on peut obtenir pour un pixel une valeur singulière n'ayant pas de sens physique.

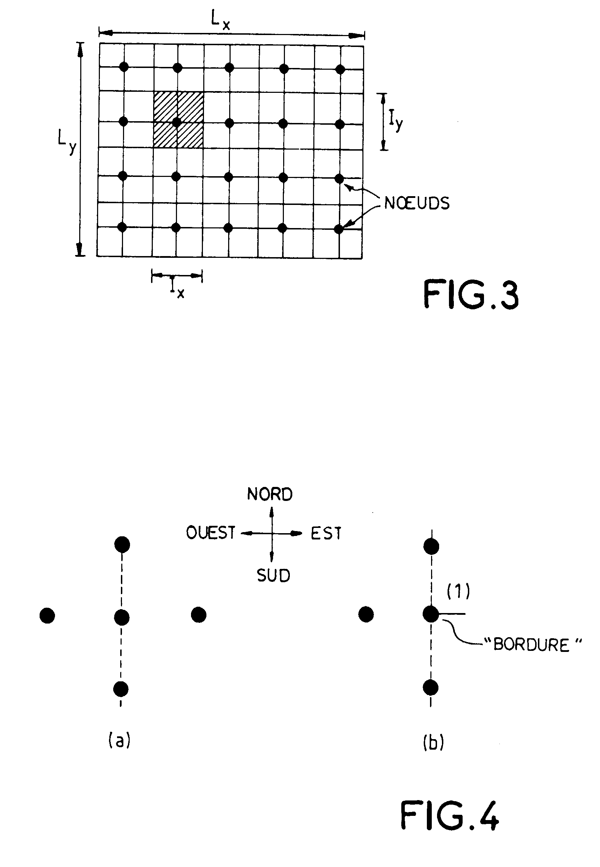

Pour ces raisons, on travaille avantageusement avec un nombre réduit de points. On appellera ces points des noeuds. Ces noeuds sont disposés aux intersections d'un maillage (cf. figure 3). Le maillage choisi est le maillage le plus simple : maillage rectangulaire, caractérisé par son pas : $I_x$ dans la direction x et $I_y$ dans la direction y. C'est en effet le maillage le plus naturel pour discrétiser une image rectangulaire.

Afin d'automatiser le processus de visualisation des surfaces des objets détectés, on réalise un programme dans lequel on crée dans un premier temps, une structure de données contenant le nombre total de noeuds du maillage. A chaque noeud correspond une valeur moyenne de l'intensité totale émise par les objets de la scène étudiée, de l'ellipticité et de l'inclinaison du grand axe de l'ellipse, calculées à partir des valeurs obtenues pour les Ix*Iy pixels l'entourant. Ces valeurs moyennes sont calculées pour chaque noeud à partir des trois images obtenues avec l'imageur polarimétrique. Grâce aux valeurs moyennes d'ellipticité, on peut avoir l'angle d'émission de la lumière en ce point, c'est-à-dire l'angle entre la normale et l'axe Oz, au signe près. A chaque noeud sont associés quatre paramètres le caractérisant :

- son abscisse (x),
- son ordonnée (y),
- la valeur des coordonnées de son vecteur normal (indétermination du signe),
- ses quatre voisins les plus proches (liens).

En plus de ces paramètres physiques, il est important pour la suite de définir les liens entre chaque noeud du maillage, c'est-à-dire de définir une interconnexion hiérarchisée des noeuds de maillage. On considère, pour le maillage rectangulaire choisi, qu'un noeud a au maximum quatre proches voisins, un dans chacune des directions cardinales (cf. figure 4). Mais il peut y avoir moins de quatre voisins s'il se situe sur un bord. Au début du programme, les noeuds n'ont aucun lien entre eux. Par la suite, si une connexion entre deux noeuds est établie, le lien entre ces noeuds sera dit « connecté ». Il est utile d'assigner l'état « bordure » aux liens des noeuds qui sont sur le bord dans la direction dans laquelle ils n'ont pas de voisin.

Pour calculer les cotes (z) des noeuds, dans un premier temps, on oublie que l'on a une indétermination quant au signe de $\vec{N}$. Comment peut-on à partir des noeuds et du vecteur normal en chacun de ces noeuds calculer leur cote z ?

Si l'on connaît de façon certaine le vecteur normal

$$\vec{N}_0 = \begin{pmatrix} n_{x0} \\ n_{y0} \\ n_{z0} \end{pmatrix}$$

d'un pixel O de l'image, on lui fixe arbitrairement une cote $z_0$. On peut facilement obtenir la hauteur $z_M$ du pixel voisin M :

$$z_M = z_0 + \oint \vec{N}\left(\vec{s}\right) d\vec{s}$$

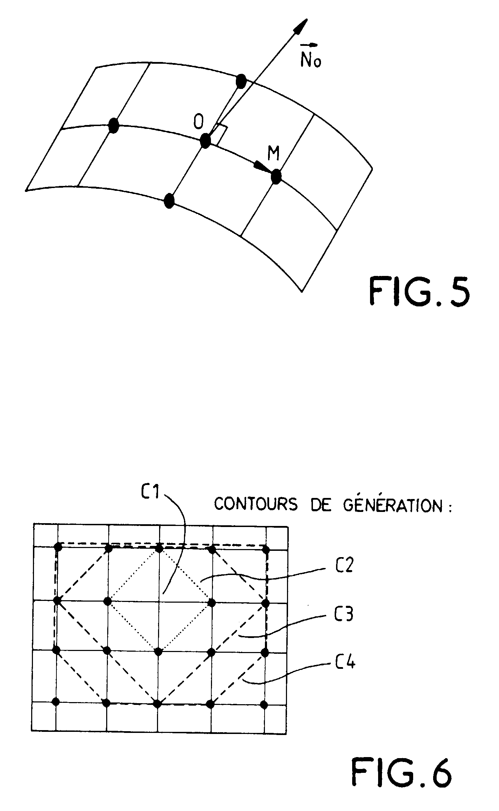

Cette intégrale peut être menée sur n'importe quel chemin reliant O à M. On considère que la distance entre deux pixels est suffisamment faible pour que $\vec{N}_0$ soit normal au vecteur formé par $\vec{OM}$ (cf. figure 5) (approximation du premier ordre).

Dans ce cas, on obtient $z_M$ en fonction des coordonnées de O, M et $\vec{N}_0$.

$$\vec{N}_0.\vec{OM} = 0 \Leftrightarrow z_M = z_0 + \frac{n_{x0}}{n_{z0}}(x_0 - x_M) + \frac{n_{y0}}{n_{z0}}(y_0 - y_M)$$

Cette équation fournit une méthode pour calculer z de proche en proche. Il faut maintenant établir une hiérarchie de sommets.

Comme avec cette méthode on peut calculer la cote z des quatre voisins proches d'un noeud, on peut déterminer un ensemble de contours orientés de longueur croissante, tels qu'à l'intérieur d'un contour donné tous les noeuds inscrits soient entièrement caractérisés par une génération (z et N connus) à partir des contours plus courts. Les contours sont donc caractérisés par une génération (cf. figure 6) et une longueur. Pour passer d'un contour de génération n au contour de génération n+1, il faut tester l'état du lien entre chaque noeud du contour n et ses quatre voisins proches.

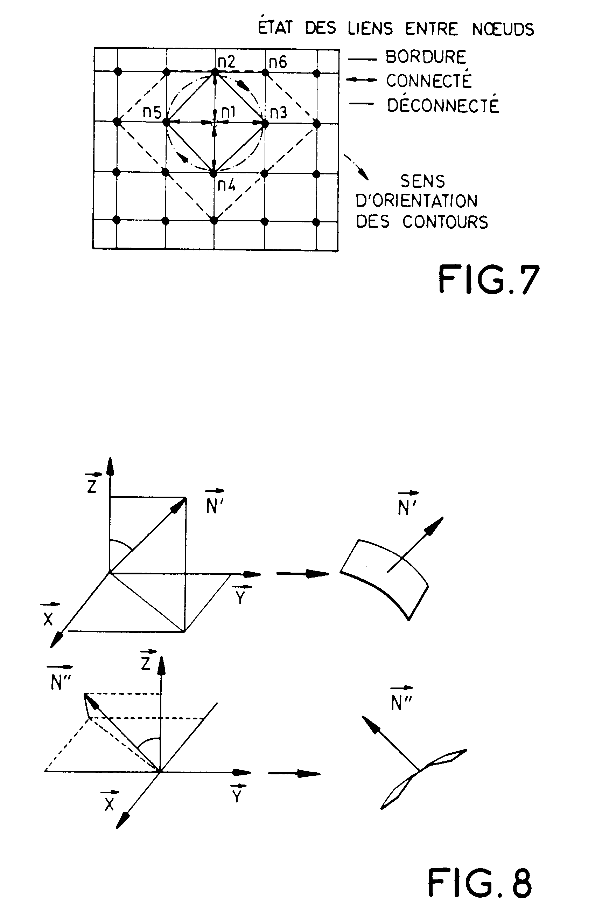

Prenons un exemple simple, par exemple le contour de génération (C1) qui est un point. Comme précisé au départ, aucun noeud n'est lié à son voisin. Donc le noeud constituant le premier contour va pouvoir se lier avec ses quatre voisins proches. Dans ce cas, il positionne l'état de ses quatre liens à « connecté », et réciproquement le voisin qui a été choisi doit positionner l'état de son lien dans la direction du premier noeud à « connecté ». Il est important de reclasser les noeuds appartenant à un même contour. En effet, pour construire le contour de troisième génération, il faut parcourir le contour de génération précédente (C2). Pour chaque noeud de (C2), on teste l'état du lien avec ses quatre voisins les plus proches. Trois cas se présentent (cf. figure 7) :

-    le voisin n'est pas connecté, on l'inclut dans le nouveau contour (ex. : noeud $n_6$).
-    il appartient déjà à ce contour ou à un contour précédent (un de ces quatre liens est positionné à « connecté ». On passe au voisin suivant (ex. : noeud $n_1$).
-    il est sur un bord (ex. : noeud $n_2$) : dans ce cas, on l'inclut sur le nouveau contour.

Donc, grâce à cette méthode, on peut calculer de proche en proche, en agrandissant le contour considéré, les cotes de tous les points de la surface étudiée. Cependant, on ne peut passer de la génération n à n+1 sans connaître les bons vecteurs normaux de tous les points du contour de génération n. La méthode de génération exposée ici, donne un exemple de contours ordonnés. Les contours plus récents incluent les contours de génération antérieure. Comme chaque noeud de génération n possède un unique ancêtre de génération n-1, l'ensemble des contours donne automatiquement, pour chaque noeud, une liste unique de sommets tous issus d'un même ancêtre commun.

Voyons maintenant comment cela peut être utilisé pour inférer le signe des vecteurs normaux à la surface en chacun des noeuds.

Jusqu'à présent, on a ignoré le signe du vecteur normal en chaque noeud du maillage, ou plus précisément on a une ambiguïté entre deux valeurs ($\vec{N}'$ et $\vec{N}'$) pour ce vecteur normal (cf. figure 8). Les coordonnées de $\vec{N}'$ et $\vec{N}''$ sont :

$$\vec{N}' \begin{pmatrix} n_x \\ n_y \\ n_z \end{pmatrix} \text{ et } \vec{N}'' \begin{pmatrix} -n_x \\ -n_y \\ n_z \end{pmatrix}$$

Dans un premier temps, on a recours à des méthodes locales. Les seules informations que l'on connaisse de façon certaine (et que l'on considère comme vraies) lorsque l'on choisit entre les deux valeurs de $\vec{N}$ sont les cotes z et les vecteurs normaux des noeuds déjà déterminés lors du traitement des contours de générations précédentes.

On notera qu'une fois que l'on a, par une première méthode, fait un premier choix quant à la valeur des vecteurs normaux pour tous les noeuds du maillage. On peut affiner le choix des vecteurs normaux par une seconde méthode locale plus précise. En effet, pour valider le choix du signe normal en un point du contour de la $n^{ième}$ génération, on peut tenir compte des vecteurs normaux des noeuds des contours de génération n-1 et n+1, trouvés par la première méthode.

Dans un troisième temps, on peut également appliquer des méthodes globales, c'est-à-dire que l'on ne fera plus d'hypothèses quant à la position d'un point de la surface par rapport à l'autre, mais quant à la forme tridimensionnelle de l'objet en entier, trouvée par les méthodes locales.

On va examiner une première méthode locale de détermination du signe deN, selon un critère géométrique. On se place dans le cas général où l'on cherche à déterminer le signe du vecteur normal pour un noeud O du $n^{ième}$ contour. On suppose que les vecteurs normaux trouvés pour le (n-1)$^{ième}$ contour sont corrects. Au préalable, on a calculé les cotes de tous les noeuds du contour de la génération n. On peut connaître, grâce au système de liens mis en place, par quel noeud (A) de la génération antérieure le noeud (O) a été connecté pour faire partie du contour de génération n. On remarque que si le noeud est un bord, il n'est pas utile de chercher à déterminer, pour chaque contour auquel il appartient, son vecteur normal.

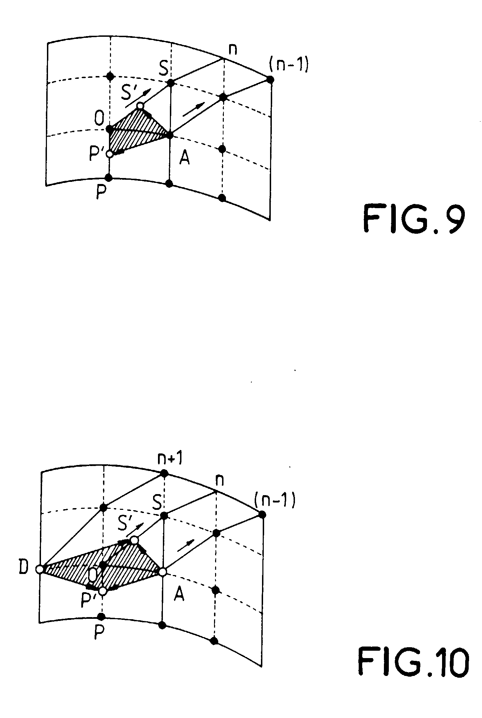

On peut également connaître, du fait que le contour est orienté, quel est le noeud (P) précédent O sur le contour n, ainsi que le noeud (S) le suivant (cf. figure 9).

La méthode consiste à calculer les vecteurs reliant le point A de la génération (n-1) et les deux centres des segments PO et OS. A partir de ces vecteurs, en faisant le produit vectoriel, on peut trouver un vecteur $\vec{N}_{Local}$ localement normal à la surface entourant ces points. Donc, si l'on effectue le produit scalaire de ce vecteur avec les deux vecteurs normaux possibles, on devrait trouver un produit scalaire nul. On prend donc le vecteur normal le plus colinéaire possible à ce vecteur $\vec{N}_{Local}$ trouvé.

En résumé, la méthode qui vient d'être présentée, compare en chaque noeud du maillage le vecteur normal connu à un demi-tour près par la mesure optique à la normale locale déduite des cotes des voisins immédiats.

Si l'on a déjà parcouru l'ensemble des noeuds du maillage, on peut réitérer le calcul en considérant cette fois-ci quatre points autour du point que l'on recherche. Pour affiner la détermination du plan localement tangent en vue de la comparer au vecteur normal du site $\tilde{N}_{Local}$, on procède à une itération du critère géométrique.

Si l'on a déterminé pour tous les noeuds du maillage, les vecteurs normaux et les cotes, on peut réactualiser les valeurs obtenues en tenant compte à la fois de l'ancêtre et des proches voisins, mais aussi du descendant de la génération du contour suivante. Pour le noeud de départ, le calcul n'est pas modifié. Par contre, pour les contours suivants, les vecteurs normaux sont calculés à partir des cotes des quatre noeuds A, S, P et D. (cf. figure 10). A partir de la troisième génération de contours, les cotes sont réactualisées en tenant compte des nouvelles valeurs des vecteurs normaux de la génération précédente.

Le principal avantage des deux méthodes locales présentées ci-dessus est le faible coût en temps de calcul nécessaire. Il est tout à fait envisageable de faire ces calculs en temps réel.

L'ensemble des procédés purement topologiques précédemment décrits reposent sur des propriétés locales de la surface. Ces critères sont relativement simples à mettre en place et sont très peu coûteux en temps de calcul. Cependant, la présence sur les cibles réelles, d'aspérités, points singuliers, réflexions spéculaires, risque d'entraîner des erreurs dans la reconstruction de forme, principalement dans les zones de faible courbure. Aussi, dans les cas de reconstruction de surface les plus difficiles (bruit, faible courbure, ...), il faut renoncer à un algorithme de reconstruction local. Il peut également être nécessaire d'explorer un arbre de choix binaires correspondant aux deux possibilités pour les vecteurs normaux et envisager un critère plus global. Ce critère global utilise avantageusement une méthode d'optimisation de l'énergie de courbure.

Un tel problème est similaire à un problème de spins (up ou down) en interaction. Les méthodes de minima-

EP 0 903 609 A1

lisation d'une pseudo-énergie développées en physique statistique sont donc applicables ici. A titre expérimental, on a essayé une méthode d'optimisation globale le long du contour courant. La pseudo-énergie choisie était la somme des courbures principales en valeur absolue, fonction semblable à la contrainte locale d'une surface élastique. L'exploration des cas était optimisée pour éliminer les erreurs d'orientation des vecteurs normaux induisant les plus fortes contraintes. Des résultats de ces expériences ont montré que ces techniques complètent utilement les méthodes locales, au prix d'un temps de calcul plus long.

Après obtention d'un maillage décrivant la surface des objets recherchés, on peut améliorer la perception de leur forme tridimensionnelle. On peut, par exemple, calculer les images qui seraient vues séparément par les yeux gauche et droit, et les présenter à un observateur au moyen d'un stéréoscope. On peut avantageusement mettre en oeuvre des techniques classiques utilisées en réalisation d'images synthétiques.

On peut, en particulier, plaquer sur la structure maillée l'image en intensité des objets, afin d'en obtenir la texture. Pour mieux rendre de façon artificielle l'impression tridimensionnelle, on peut placer une ou plusieurs sources lumineuses créant des réflexions sur les objets, leurs emplacements étant calculés en fonction de l'orientation des facettes de ces objets. On obtient ainsi une image très proche d'une image que l'on obtiendrait en lumière visible, et dont l'interprétation est beaucoup plus aisée que celle d'images thermiques.

Afin d'offrir une meilleure perception des objets traités, on peut avantageusement changer le point de vue de la caméra infrarouge servant à effectuer les mesures. On peut même, à partir de plusieurs relevés effectués depuis des points de vue différents, reconstruire en partie ou en totalité les faces cachées de la scène.

De façon avantageuse, on peut plaquer sur le maillage tridimensionnel une texture dépendant de la valeur de la contrainte calculée par la méthode globale. Ceci offre d'autres informations intéressantes quant à la géométrie de la cible, en particulier en ce qui concerne les points anguleux et les déchirures.

Bien entendu, si au lieu de procéder à un maillage comme décrit ci-dessus, on prend en compte tous les pixels que peut capter le capteur, les étapes décrites ci-dessus de reconstruction d'image restent valables.

## Revendications

1. Procédé d'imagerie tridimensionnelle à partir d'images thermiques , selon lequel :

   - on relève, pour au moins un lieu d'observation, pour chaque pixel ou groupe de pixels de l'image thermique d'au moins un objet se trouvant à un emplacement connu ou supposé, un triplet d'informations optiques relatives chacune à une condition d'observation déterminée différente,
   - on stocke les informations ainsi relevées,
   - on calcule, à partir des informations ainsi stockées trois paramètres de Stokes relatifs à chaque pixel en question (I, Q, U),
   - on calcule, à partir de ces trois paramètres, pour chaque pixel considéré, l'ellipticité, l'inclinaison du grand axe de l'ellipse et de l'intensité totale de l'onde partiellement polarisée issue du pixel considéré (tan $\varepsilon$, $\alpha$, I totale),
   - à partir de ces dernières valeurs, on reconstruit un champ de vecteurs pseudo-normaux, qui sont, par petits domaines, normaux à un demi-tour près autour de la ligne de visée, à la surface des objets au voisinage de ces domaines,

   caractérisé par le fait qu'on lève l'indétermination sur les sens des vecteurs normaux à l'aide de critères mathématiques et/ou topologiques, fondés sur des propriétés de régularité de la représentation mathématique de la surface à reconstruire, propriétés qui contraignent l'orientation des vecteurs normaux, et qu' à partir des vecteurs normaux réorientés, on choisit une origine pour la surface de chaque objet, et de proche en proche, on assemble les surfaces élémentaires successives, et on reconstruit ainsi la surface visible de chaque objet considéré depuis le lieu d'observation en question.

2. Procédé selon la revendication 1, caractérisé par le fait que chaque triplet d'informations est obtenu pour une même position d'un capteur, en disposant entre lui et les objets dont le capteur relève l'image thermique un dispositif optique pouvant avoir trois caractéristiques différentes vis-à-vis de la lumière émise par ces objets.

3. Procédé selon la revendication 2, caractérisé par le fait que le dispositif optique est un polariseur rotatif.

4. Procédé selon la revendication 3, caractérisé par le fait que le polariseur rotatif est du type à grille et qu'on lui fait occuper trois positions angulaires : une position origine, et les deux autres décalées respectivement de 60 et 120°.

5. Procédé selon l'une des revendications 2 à 4, caractérisé par le fait que les paramètres de STOKES sont calculés à l'aide de la matrice de MUELLER du dispositif optique, pour chacune desdites trois caractéristiques différentes.

6. Procédé selon la revendication 5, caractérisé par le fait que les paramètres de Stokes à l'entrée dudit dispositif optique étant $I_{in}$, $Q_{in}$, $U_{in}$, les paramètres relatifs à l'onde partiellement polarisée issue de chaque pixel considéré sont données par :

$$I_{totale} = I_{in}$$

$$\alpha = \frac{1}{2} \arctan\left(\frac{U_{in}}{Q_{in}}\right)$$

$$\tan\varepsilon = \sqrt{\frac{I_{totale} - \sqrt{U_{in}^2 + Q_{in}^2}}{I_{totale} + \sqrt{U_{in}^2 + Q_{in}^2}}}$$

7. Procédé selon la revendication 6, caractérisé en ce que l'on détermine l'ellipticité (tan ε) par la relation :

$$f^1(\tan \varepsilon)\big|_{n= nmil} = \theta_e$$

avec $f(\theta_e) = \cos (\arcsin (\sin \theta e/n) - \theta_e)$ n mil étant l'indice optique de l'objet considéré et

$$\tan\varepsilon = \sqrt{\frac{1}{|n|^2}}$$

pour $\theta_e \to \pi/2$
   $\theta_e$ étant l'angle d'émission.

8. Procédé selon l'une des revendications précédentes, caractérisé en ce que lors de la reconstruction de surfaces, on utilise une méthode d'optimisation permettant de modéliser l'image polarisée afin d'obtenir les mêmes propriétés de polarisation de la lumière que celles relevées pour les objets en question.

9. Procédé selon l'une des revendications 1 à 7, caractérisé par le fait que lors de la reconstruction de surfaces on met en oeuvre des critères locaux déduits de la modélisation des surfaces à reconstruire.

10. Procédé selon l'une des revendications précédentes, caractérisé en ce que pour améliorer la perception tridimensionnelle des objets reconstruits, on met en oeuvre au moins une des techniques de rendu d'images 3D telles que plaquage de texture ou ombrage.

FIG.1

FIG.2

FIG.3

FIG.4

# FIG.5

CONTOURS DE GÉNÉRATION :

C1

C2

C3

C4

# FIG.6

ÉTAT DES LIENS ENTRE NŒUDS

— BORDURE
↔ CONNECTÉ
— DÉCONNECTÉ

SENS
D'ORIENTATION
DES CONTOURS

# FIG.7

# FIG.8

FIG.9

FIG.10

Office européen
des brevets

**RAPPORT DE RECHERCHE EUROPEENNE**

Numéro de la demande

EP 98 40 2337

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 416 324 A (CHUN CORNELL S L) 16 mai 1995 | 1,2 | G02B27/28 G02B23/12 |
| A | * le document en entier * | 3-10 | G01J4/00 |
| X | CHUN C S L ET AL: "Polarization-Sensitive Thermal Imaging Sensor" PROCEEDINGS OF THE SPIE, INFRARED TECHNOLOGY XXI, vol. 2552, 9 - 13 juillet 1995, pages 438-444, XP002067386 SAN DIEGO, CA, US | 1,2 | |
| A | * le document en entier * | 3-10 | |
| X | CHUN C S L ET AL: "Target Discrimination Usung a Polarization-Sensitive Thermal Imaging Detector" PROCEEDINGS OF THE SPIE, TARGETS AND BACKGROUNDS: CHARACTERIZATION AND REPRESENTATION, vol. 3062, 21 - 23 avril 1997, pages 60-67, XP002067387 ORLANDO, FLA, US | 1,2 | |
| | | | **DOMAINES TECHNIQUES RECHERCHES (Int.Cl.6)** |
| A | * le document en entier * | 3-10 | G02B G01J |
| A | US 5 396 329 A (KALAWSKY ROY S) 7 mars 1995 * le document en entier * | 1-10 | |
| A | US 5 138 162 A (HACSKAYLO MICHAEL) 11 août 1992 * le document en entier * | 1-4 | |
| A | US 5 028 138 A (WOLFF LAWRENCE B) 2 juillet 1991 * le document en entier * | 1-10 | |

-/--

Le présent rapport a été établi pour toutes les revendications

| Lieu de la recherche | Date d'achèvement de la recherche | Examinateur |
|---|---|---|
| LA HAYE | 2 novembre 1998 | Ward, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

**Office européen des brevets**

# RAPPORT DE RECHERCHE EUROPEENNE

Numéro de la demande

EP 98 40 2337

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO 96 15429 A (WOLFF LAWRENCE B) 23 mai 1996 * le document en entier * | 1-4 | |
| A | US 5 057 843 A (DUBOIS PASCALE C ET AL) 15 octobre 1991 * le document en entier * | 1 | |

**DOMAINES TECHNIQUES RECHERCHES (Int.Cl.6)**

Le présent rapport a été établi pour toutes les revendications

| Lieu de la recherche | Date d'achèvement de la recherche | Examinateur |
|---|---|---|
| LA HAYE | 2 novembre 1998 | Ward, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 98 40 2337

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-11-1998

| Document brevet cité au rapport de recherche | | Date de publication | Membre(s) de la famille de brevet(s) | | Date de publication |
|---|---|---|---|---|---|
| US 5416324 | A | 16-05-1995 | AUCUN | | |
| US 5396329 | A | 07-03-1995 | DE<br>GB | 3824968 A<br>2271845 A,B | 26-05-1994<br>27-04-1994 |
| US 5138162 | A | 11-08-1992 | AUCUN | | |
| US 5028138 | A | 02-07-1991 | AUCUN | | |
| WO 9615429 | A | 23-05-1996 | CA<br>EP<br>US | 2204785 A<br>0791170 A<br>5726755 A | 23-05-1996<br>27-08-1997<br>10-03-1998 |
| US 5057843 | A | 15-10-1991 | AUCUN | | |

EPO FORM P0460

Pour tout renseignement concernant cette annexe : voir Journal Officiel de l'Office européen des brevets, No.12/82